# EUROPEAN PATENT APPLICATION

(11) **EP 2 490 413 A1**
(43) Date of publication of application: **22.08.2012**
(21) Application number: 09850358.4
(22) Date of filing: 14.10.2009
(51) Int. Cl.: H04M 1/17, H04R 1/12

(54) **TELEPHONE-SANITIZING INFORMATION CARRIER**

(71) Applicant: Pascual Lejarza, Pablo José, 48901 Bizcaia (ES)
(72) Inventor: Pascual Lejarza, Pablo José, 48901 Bizcaia (ES)
(74) Representative: Elzaburu Marquez, Alberto
(86) International application number: PCT/ES2009/070435
(87) International publication number: WO 2011/045445

(57) **Abstract**

In the field of multifunction devices that serve as information support and telephone equipment guards, the invention describes a stand designed to display information (notices, advertisements, etc.) in multi-user telephones, sanitizing and protecting these devices physically and active users of the existing contact with germs on phones through the impregnation of the support with disinfectants or fungicides or antibacteriological substances and fragrances/perfumes. The support may be placed on the telephone by means of electrostatic or adhesive attachment or by endorsement of self-adhesive dressings, which can also be impregnated with the aforementioned substances. Information support sanitizer protects sensitive areas of the telephone itself, including microphone and headset, preventing possible damage to the telephone sets derived from corrosion and moisture from contact with the user's body or the environment where the telephone may be located.

## Description

### Field of the Invention

The invention falls in the field of multifunction devices that support information and protectors and sanitizers of handsets.

### Prior Art

Within the segment of multi-media public information supports designed for fixed voice transmission apparatus where there is physical contact between handset and users there are a number of documents that focus primarily on the passive protection of users through a device which, besides allowing the functionality of the information carrier, such as advertising, serve as a physical barrier but passive, between the handset and the user.

Thus, Spanish Utility Model No. 1 037 973 anticipates a device that can be used as an advertising vehicle consisting of a lens filter for handsets. Device characteristics are centered on passive protection: the physical separation between handset and phone user. However, the invention according to claim 1 provides two features, using the device as a vehicle of transmission, such as advertising or publicity, printing or graphic inscriptions on the surface of its central or lateral area and additionally the physical and active protection, via active sanitizing agents, to users.

### Description of the Invention

To prevent users of voice transmission equipment being exposed to use and contact with a diversity of users (such as in hospitals, public administrations, prisons, telephone booths and hotel information to the public, etc.) with the germs that reside in these handsets we refer in claim 1 to an information carrier (notices, advertisements, etc.) that sanitizes phones.

A stand designed to display sanitizing information must be installed in as many handsets as possible to use multi-user environments above with the aim of preventing the accumulation of microorganisms and bacteria in the recesses, slots, moistened surfaces and areas, areas of said telephone apparatus in which conditions are conducive for the microorganisms to persist, into contact with the users of these devices. The rapid distribution and use of these devices is of great importance in terms of proliferation of infectious diseases and pandemics since, according to the World Health Organization, any object which is shared by people becomes a disseminator of infection; in the case of handsets, it is technically impossible to carry out regular internal cleaning, making these devices a reservoir of bacteria and pathogens. The fact that this support will serve as a vehicle for transmitting information to the user (such as notices, advertisements) facilitates the existence of entities motivated by the rapid and massive distribution and installation of this device in the aforementioned handsets, reaching the target audience, ensuring their use by the same and, therefore, achieving the objective of the sanitation of multi-user telephones.

Finally the information support sanitizer (12) acts on the public phones as a physical barrier that protect electrical / electronic parts whose components are sensitive to failure, handsets, microphone, earplugs where corrosion is caused by moisture and dirt/debris from typical use.

### Embodiment of the Invention

Information support sanitizer (12) of telephones functions as a display window of information which discloses the information that an entity wants to make available to a particular sector of the population, while exerting a physical barrier, prophylactic and disposable between the user and the phone itself, which, due to its constant use, contains a reservoir of germs in areas subject to greater contact with the face, hands and the rest of the body of the user, preventing contagions and infections. Information support sanitizer (12) sanitizes the telephone devices and solves a public health problem by exercising a prophylactic barrier between phone and user.

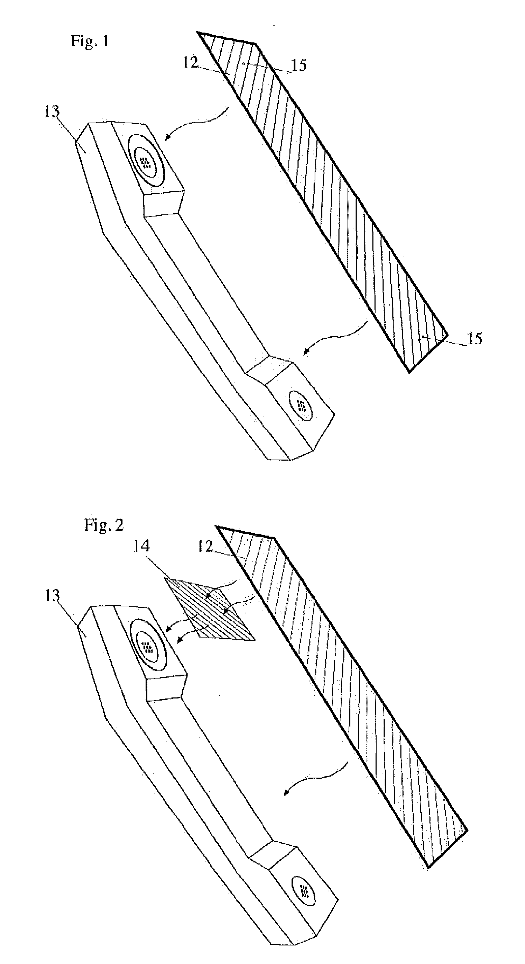

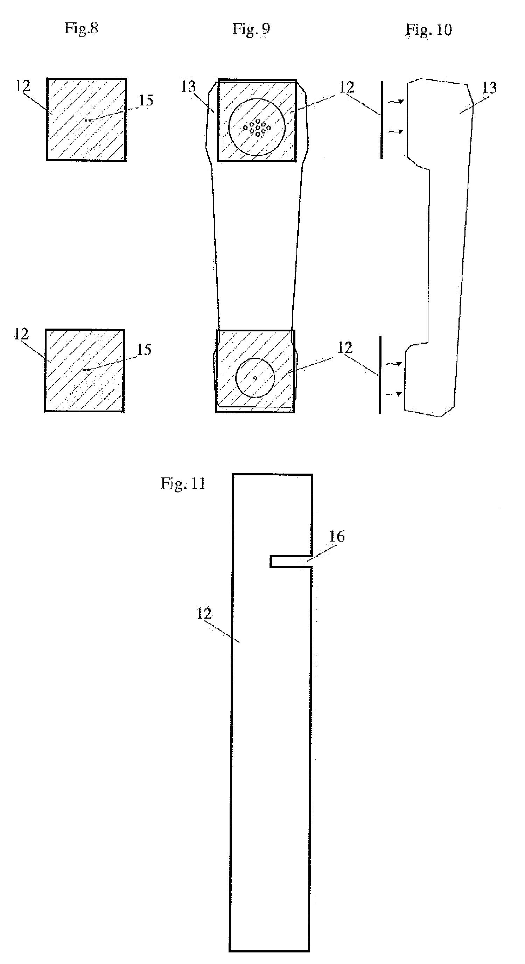

Information support sanitizer (12) consists of one or several sheets or flexible segments (Fig. 1, 6, 7) designed to fit the housing of each model of telephone apparatus or as a set of two or more separate pieces only for the microphone and headset, mainly covering both embodiments the headset and microphone (Fig. 9). Information support sanitizer (12), made of a material capable of binding, binds to the phone (13) by adhesion (Fig. 1). In another implementation (Fig. 2), by placing between the telephone (13) and the actual information carrier (12) of an adhesive dressing (14) on its two faces, one gets the adhesion of the information carrier sanitizer (12) to the telephone set (13). The application of said dressing (14) allows both the variation of frequency of change of the support (12) by using the least quantity of attachments between telephone (13) and bracket (12).

The fixing means between the telephone (13) and support (12) and/or dressing (14) allows withdrawal of the support (12) and / or dressing (14) in a fast and simple period of time or after use, leaving no residue on the casing of the phone (13).

The sheets of the information carrier sanitizer (12) are made of editable and printable material on all sides. Their attachment to the housing of the phone, including its headset and microphone, is performed in a first implementation (Fig. 1, 4, 6, 9) by fixing means (such as adhesive, magnetic, electrostatic means) adherent capacity the inner side or face of adhesion to the telephone set (13) and in a second implementation (Fig. 2) through fastening means above and / or the interposition of one or more self-adhesive dressings (14), which are adhesive on both sides and made of absorbent material (Fig. 2). This embodiment allows that the dressing can also be impregnated with fungicides, disinfectants and / or fragrances / perfumes, reinforcing the sanitizing capability of the invention. The embodiment including the dressing (14) applies both to the one-piece support (12) (Fig. 1, 4, 6, 11) and the two-pieces support (Fig. 8, 9, 10). The use of the dressing (14) allows the variation of the frequency of change of the support (12) with respect to the frequency of change of the support in the case where there is no said dressing (14).

Information support sanitizer (12) is impregnated with disinfectants, fungicides and antibacterial that gives the advertising medium and sanitizing aseptic capacity, protecting the user from the spread of germs in all types of telephone instruments, and works as a prophylactic barrier between the user and handsets, especially in all areas that are in direct contact or proximity with the user. The information support sanitizer (12) is optionally impregnated of pleasant flavors, fragrances and the like for conferring a greater aseptic and sanitizing capacity to the advertising support, thus creating a welfare and comfort feeling in the user which makes use of the telephone with its support. In the second implementation, both the support (12) and the dressing (14) endorsed between advertising and phone support are impregnated with the above substances by being manufactured in an absorbent material. The optional scents / perfumes, besides strengthening that sanitizing role, produce a pleasant feeling to the user. The informative content can be included in all editable sides of the device and fungicides and / or fragrances / perfumes may be impregnated in the entire support, or just in the areas that are likely to be exposed to moisture, ie, microphone and headset.

The design of the information support sanitizer (12) allows a cut or cutout (16) (Fig. 11) in those cases where the connection of the handset casing (13) to the telephone base station is performed by wire or by insertion of the telephone apparatus (13) in the corresponding base station to wireless phones. The cut or cutout (16) is located in the area of information support sanitizer (12) which coincides with those connections with the base station, allowing a perfect fit and placement in those phone models with various connection systems. An example of which is shown in (16) for a connection to the cable base station in Fig. 11.

Information support sanitizer (12) protects sensitive areas of the phone itself, including microphone and headset, preventing possible damage to the telephone sets derived from corrosion and moisture from contact with the user's body or the environment where the phone can be found.

At the end of its useful life, by the end of a certain time or by a specified number of uses or after each use, the support is likely to be discarded, ensuring the perfect cleanliness of the phone whenever it is used or it can be processed from the point of view of purification and sanitization for further use.

The inclusion of pleasant scents by impregnation or other mechanisms that retain odours in the information support sanitizer (12) facilitates the distribution of entities interested in publicizing their aromas, accelerating the provision of these mechanisms to protect the population.

In short, the characteristics of the information support sanitizer (12), which potentially motivate stakeholders to position its information content (graphics, aromatic), improve the rapid distribution to the target segment.

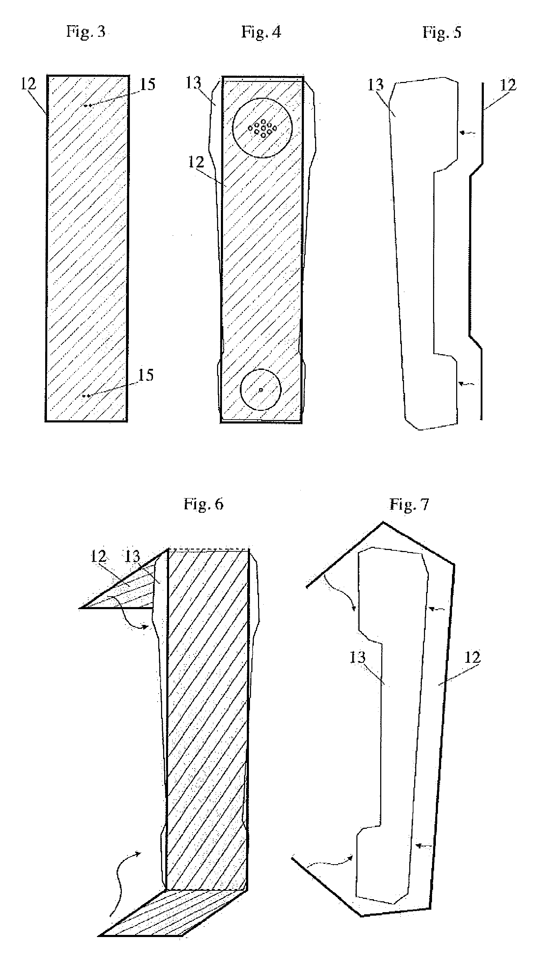

Information support sanitizer (12) phone does not diminish the reception and transmission of sound from / to the phone. However, as exemplified in Figure 4 and 9, the invention allows the support (12) to include perforations (15) in the areas coinciding with the telephone earpiece and microphone (13) of the telephone without this implying a decrease in sanitizing capacity.

### Description of the Drawling

Figures 1 to 11 detail the different implementation forms of advertising media placement sanitizer (12) in phone cases (13).
Fig. 1: View of the information support sanitizer (12) applied on the handset (13)
Fig. 2: View represented in the application of the dressing (14) disposed between the telephone set (13) and the information support sanitizer (12)
Fig. 3: Plan view of the information carrier sanitizer (12) with perforations (15) in the areas corresponding to headset and microphone
Fig. 4: Plan view of the information carrier sanitizer (12) applied at (13) on its inner side
Fig. 5: Profile view of setting mode of the information support sanitizer (12) to the telephone set (13)
Fig. 6: View of the back of the information support sanitizer (12) on the external face of the handset (13), folding inward to cover microphone and headset.
Fig. 7: Profile view of the application or fixation of the information support sanitizer (12) on the telephone (13), retaining the folding boom areas and handset
Fig. 8: Plan view of the information support sanitizer (12) designed in the implementation of two independent pieces
Fig.9: Plan view of the information support sanitizer (12) designed in two parts applied to the telephone (13) in the parts of the microphone and earpiece
Fig. 10: Profile view of the information support sanitizer (12) designed in two parts applied to the phone (13) in parts of the microphone and earpiece
Fig. 11: Plan view of the information support sanitizer (12) with cutout (16)

## Claims

1. Information support telephone sanitizer made with a piece of foldable sheet that acts as a separator between the telephone user and the focus of germs that accumulate on it, adapting and joining the piece to the housing which accommodates the headset and microphone of the telephone, **characterized in that** the support (12) is made of a material capable of being impregnated with sanitizing compounds and printable on either of its faces

2. Information support telephone sanitizer according to claim 1 **characterized in that** either side is printed with information (two dimensional) or contains three-dimensional information bound to the support.

3. Information support telephone sanitizer according to any of the preceding claims, **characterized in that** the support (12) is attached to the housing of the telephone through one or more attachment means.

4. Information support telephone sanitizer according to any of the preceding claims, **characterized in that** the support (12) is attached to the casing of the phone by means of adhesive or electrostatic binding.

5. Information support telephone sanitizer according to any of the preceding claims, **characterized in that** the sanitizing compounds that impregnate the support (12) are disinfectants or fungicides or antibacteriological substances.

6. information support telephone sanitizer according to any of the preceding claims, **characterized in that** the support (12) is further impregnated with one or more scents or perfumes.

7. Information support telephone sanitizer according to any of the preceding claims, **characterized in that** the support (12) is divided into two or more segments that cover different parts of the telephone (Fig. 8, 9, 10).

8. Information support telephone sanitizer according to any of the preceding claims, **characterized by** perforations (15) into the areas of the support coinciding with the areas corresponding to the speaker and microphone of the telephone set (13).

9. Information support telephone sanitizer according to any of the preceding claims, **characterized by** a cut or cutout (16) located in the area of the support (12), which, on applying said support to the telephone (13), said area coincides with the wire connections bonding to the base station or connection contacts to the base station in the case of wireless terminals

10. Information support telephone sanitizer according to any of the preceding claims, **characterized by** a dressing (14) adhesive on both faces joining the support (12) to the telephone (13), impregnated with one or more disinfectants or fungicides or antibacteriological substances, allowing to vary the frequency of change of the support (12) by the application of the dressing (14).

11. Information support telephone sanitizer according to claim 10, **characterized in that** the adhesive dressing (14) is impregnated with one or more fragrances or perfumes.

12. Information support telephone sanitizer according to any of the preceding claims, **characterized in that** the support (12) and the dressing (14) are present together in one package or separately in different packages containing several units already printed and folded so as to facilitate extraction of the same package.

13. Information support telephone sanitizer according to any of the preceding claims, **characterized in that** the support (12) is reusable through purification and sanitation process for further use.
